# EUROPEAN PATENT SPECIFICATION

(11) **EP 0 767 950 B1**
(45) Date of publication and mention of the grant of the patent: **25.10.2000**
(21) Application number: 95925191.9
(22) Date of filing: 13.06.1995
(51) Int. Cl.: G10L 15/18, G10L 15/06

(54) **METHOD AND DEVICE FOR ADAPTING A SPEECH RECOGNITION EQUIPMENT FOR DIALECTAL VARIATIONS IN A LANGUAGE**
VERFAHREN UND VORRICHTUNG ZUR ANPASSUNG EINES SPRACHERKENNERS AN DIALEKTISCHE SPRACHVARIANTEN
PROCEDE ET DISPOSITIF POUR ADAPTER UN EQUIPEMENT DE RECONNAISSANCE DE LA PAROLE AUX VARIANTES DIALECTALES DANS UNE LANGUE

(30) Priority: 29.06.1994 SE 9402284
(43) Date of publication of application: 16.04.1997
(73) Proprietor: TELIA AB, 123 86 Farsta (SE)
(72) Inventor: LYBERG, Bertil, S-610 70 Vagnhärad (SE)
(74) Representative: Akerman, Marten Lennart
(86) International application number: PCT/SE95/00710
(87) International publication number: WO 96/00962

(56) References cited:
- EP-A- 0 674 307
- SE-A- 9 303 623
- SPEECH COMMUNICATION, Volume 15, No. 3-4, December 1994, P. TAYLOR, "The Rise/Fall/Connection Model of Intonation", pages 169-186.
- EUROPEAN CONFERENCE ON SPEECH COMMUNICATION AND TECHNOLOGY..., Sept. 1989, R. COLLIER, "Intonation Analysis: The Perception of Speech Melody in Relation to Acoustics and Production", pages 38-44.
- PATENT ABSTRACTS OF JAPAN, Vol. 17, No. 707; & JP,A,05 241 596 (N.T.T. DATA TSUSHIN K.K.), 21 Sept. 1993.
- PROCEEDINGS OF THE INTERNATIONAL CONFERENCE ON ACOUSTICS...., Volume 2, 1990, "Isolated Word Intonation Recognition Using Hidden Markov Models", pages 773-776.
- H. FUJISAKI ET AL.: "Analysis an Modeling of Word Accent and Sentence Intonation in Swedish", SPEECH PROCESSING, Minneapolis (US), 27-04-1993, vol. 2, no. II, pages 211 to 214

## Description

The invention relates to a method and device for recognising a spoken language and, in particular, the recognition of different dialects in the language.

Various types of speech recognition systems are known. It is usual, in such systems, for the speech recognition equipment to be trained to recognise speech from a large number of persons. Also, the speech training follows a particular dialect, or dialects. The information collected through this process is then used by the system to interpret incoming speech. Thus, such systems cannot normally recognise dialect variations in speech which are outside the particular dialect(s) for which the system is trained.

In languages with tone word accents and tone language, the intonation pattern of the language constitutes a very important part in the understanding of the language, but known systems take no account of these speech characteristics. As a consequence of this, the recognition of words and phrases, with known speech recognition systems, can give rise to misinterpretations. The known speech recognition systems which are adapted to take account of dialects in speech, are specifically tailored for a particular dialect and are not, therefore, adapted to recognise different dialects in a language.

In SPEECH PROCESSING, Minneapolis, April 1993, volume 2, IEEE, pages II-211-214 analysis and modelling of word accent and sentence intonation in Swedish is discussed. A model is proposed in which phrase commands are assumed to be impulses and accent commands are assumed to be step-wise functions. These are linearised and the components are added and superimposed on a base line to form a F₀ (fundamental frequency) contour.

In the future, speech recognition equipments will, to an ever increasing extent, be used in many different applications where there is a need to be able to recognise different dialects in a language. The dialectal variations in a language have, in the past, been difficult to determine and, as a consequence of this, difficulties have been experienced in obtaining a proper understanding of artificially produced speech. Furthermore, the known speech recognition equipments cannot generally be used with different languages.

Thus, whilst known speech recognition systems are adapted to recognise, through training, a particular dialect in a language, it is not possible, for such systems, to recognise different dialects in that language, or dialects in different languages, using the same speech recognition equipment, without further training.

The artificial interpretation of speech has, therefore, been difficult, or impossible, to perform with known speech recognition equipments, due to the inability of such systems to recognise dialectal variations.

Apart from the technical problems of correctly interpreting speech, it is necessary, in voice control systems, for the verbal instructions, or commands, to be correctly interpreted, otherwise it would not be possible to effect proper control of different types of equipments, and/or services, for example, in a telecommunication network.

It is an object of the present invention to overcome the foregoing problems by providing a method and device for recognising a spoken language and, in particular, the different dialects in a language, using the fundamental tone curve of the speech.

The invention provides a method for recognising a spoken language in which a number of phonemes, from a segment of input speech, are identified and interpreted as possible words, or word combinations, to establish a model of the speech, the speech model having word and sentence accents according to a standardised pattern for the language concerned the method comprising the steps of determining the fundamental tone curve of the input speech; determining the intonation pattern of the fundamental tone of the input speech and thereby the maximum and minimum values of the fundamental tone curve and their respective positions; determining the intonation pattern of the fundamental tone curve of the speech model and thereby the maximum and minimum values of the fundamental tone curve and their respective positions; characterized in that the method includes the steps of; comparing the intonation pattern of the input speech with the intonation pattern of the speech model to identify a time difference between the occurrence of the maximum and minimum values of the fundamental tone curves of the incoming speech in relation to the maximum and minimum values of the fundamental tone curve of the speech model, the identified time difference being indicative of dialectal characteristics of the input speech; and adjusting the intonation pattern of the speech model, utilising the identified time difference, to bring the speech model into conformity with the input speech and thereby the dialectal characteristics of the input speech.

The invention also provides a device for recognising a spoken language including speech recognition means for identifying a number of phonemes from a segment of input speech; and interpretation means for interpreting the phonemes, as possible words, or word combinations, to establish a model of the speech, the speech model having word and sentence accents according to a standardised pattern for the language concerned, extraction means for extracting the fundamental tone curve of the input speech; first analysing means for determining the intonation pattern of the fundamental tone of the input speech and thereby the maximum and minimum values of the fundamental tone curve and their respective positions; second analysing means for determining the intonation pattern of the fundamental tone curve of the speech model and thereby the maximum and minimum values of the fundamental tone curve and their respective positions; characterized in that the device further includes comparison means for comparing the intonation pattern of the input speech with the intonation pattern of the speech model to identify a time difference between the occurrence of the maximum and minimum values of the fundamental tone curves of the incoming speech in relation to the maximum and minimum values of the fundamental tone curve of the speech model, the identified time difference being indicative of dialectal characteristics of the input speech; and correction means for adjusting the intonation pattern of the speech model, utilising the identified time difference, to bring the speech model into conformity with the input speech and thereby the dialectal characteristics of the input speech.

In a preferred method and device as claimed in claims 2 and 10, the identified phonemes are combined into allophone strings which are used, in combination with the fundamental tone curve, to identify, and thereby detect the positions of, the maximum and minimum values of the fundamental tone of the input speech. In the preferred device, the first analysing means are adapted, in response to receipt of the allophone strings from the speech recognition means, to identify, and thereby detect the positions of, the maximum and minimum values of the fundamental tone of the input speech.

With the method and device of the present invention as claimed in claims 3 and 11, the time difference is preferably determined in relation to an intonation pattern reference point, for example, the point at which a consonant/vowel boundary, i.e. CV-boundary, occurs. Further preferred embodiments of the invention are claimed in dependent claims 4-8 and 12-21.

Thus, the speech recognition method and device, according to the present invention, can recognise dialect variations in a language by comparing the maximum and minimum values of the fundamental tone curve of spoken language with corresponding values in a speech model, and obtaining details of the time difference therebetween, the time difference, which is indicative of the dialect in the spoken language, being used to adjust the model to make it correspond to the dialect concerned.

A speech recognition method and device, according to the present invention, is, therefore, adapted to recognise different dialects in a language. In essence, the fundamental tone curve of the incoming speech is extracted and its maximum and minimum values are identified. A model of the speech is created during the speech recognition process by using a lexical and syntax analysis. The speech model is given a standard intonation. A comparison is then made between the maximum and minimum values of the fundamental tone curves respectively of the incoming speech and of the speech model. A time difference between the occurrence of the maximum and minimum values of the fundamental tone curve of the incoming speech and the maximum and minimum values of the fundamental tone curve of the speech model, is identified.

The identified time difference which is indicative of the dialect in the incoming speech, is used to modify the speech model, i.e. the intonation of the speech model is brought into conformity with the intonation pattern of the incoming speech. Thus, a model of the speech can be obtained which corresponds, regarding language characteristics (including dialect), to the incoming speech.

The present invention therefore provides an improved method and device for interpreting a given speech input. The speech model resulting from this process is used for speech recognition and increases the possibility of understanding the different dialects in the language.

In a further development of the invention, a reference is used, preferably a CV-boundary, for determining the time difference between the extreme values of the intonation patterns of the input speech and speech model. Furthermore, as stated above, the outline of the fundamental tone of the speech model is based on lexical and syntactic information. Initially, the speech model has word and sentence accents according to a standard pattern for the language concerned. The lexical information includes information concerning orthography and phonetic transcription. The transcription information includes lexically abstracted accent information, of type stressed syllables, i.e. tonal word accents I and II, and information relating to the location of secondary accent, i.e. information given, for instance, in dictionaries.

The classification of the intonation patterns of the fundamental tone curves of the input speech into different dialect categories is effected on the basis of stored intonation descriptions.

The foregoing and other features, according to the present invention, will be better understood from the following description, with reference to the accompanying drawings, in which:
Figure 1 diagrammatically illustrates, in the form of a block diagram, a speech recognition device according to the present invention;
Figure 2 diagrammatically illustrates the locations of the maximum and minimum values for the fundamental tone curve for speech having a dialect 'A'; and
Figure 3 diagrammatically illustrates the locations of the maximum and minimum values for the fundamental tone curve for speech having a dialect 'B'.

Whilst the speech recognition device, according to the present invention, is particularly suited for languages with tonal word accents and tonal languages, it can be used for any language.

The following description of specific embodiments of the present invention relates to the Swedish language, where a detailed knowledge is available of how word accents and sentence accents are realised in different dialects. The description of the intonation pattern in the Swedish language is directly applicable to, for instance, the Norwegian language.

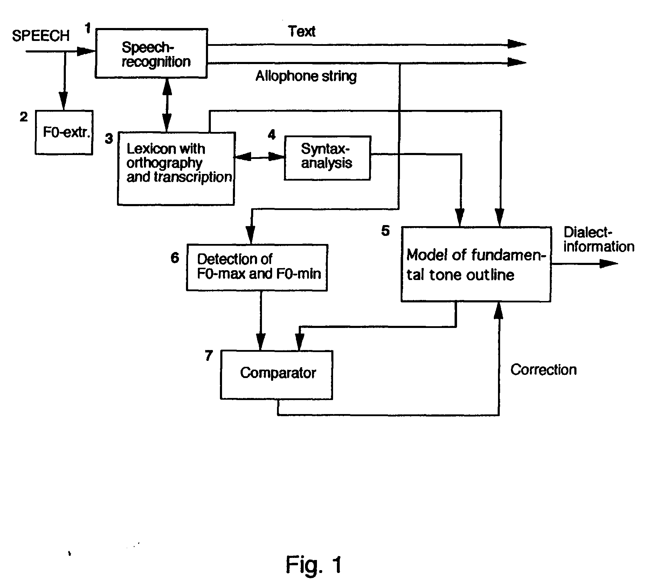

As is diagrammatically illustrated in Figure 1 of the accompanying drawings, the speech recognition device, according to the present invention includes a speech recognition unit 1, an input of which is the input of the speech recognition device, and an extraction unit 2, in which the fundamental tone FO of the input speech is extracted. The input of the speech recognition device is also connected to an input of the extraction unit 2.

Thus, a segment of speech applied to the input of the speech recognition device for conversion, for example, into a corresponding text, or for use in other applications, is applied, in parallel, to the inputs of the units 1 and 2. The speech recognition unit 1 which operates in a known manner, for example, by using a Hidden Markov model, or an equivalent model, identifies a number of phonemes from the input speech which are combined into allophone strings, i.e. one of two, or more, forms of the same phoneme, at one of the outputs of the speech recognition unit 1.

The fundamental tone FO, extracted from the input speech, by the extraction unit 2, is applied to an input of an analysing unit 6 which is adapted to determine the intonation pattern of the fundamental tone curve FO(t) of the input speech and thereby the maximum, FO-max., and minimum, FO-min., values of the fundamental tone curve FO(t). The application of the allophone string, at the output of the speech recognition unit 1, to another input of the analysing unit 6, enables the extreme values, FO-max and FO-min, of the fundamental tone curve FO of the input speech, and their respective positions, to be determined. Thus, the allophone string is used, in combination with the fundamental tone curve, to identify, and thereby detect the positions of, the extreme values of the fundamental tone of the input speech.

The information, concerning the recognised words and word combinations, i.e. phrases, generated by the speech recognition unit 1, is applied to a lexicon 3, i.e a dictionary, with orthography and transcription, wherein the words are checked lexically. Any of the words which do not exist in the language concerned, are excluded. The word combinations, or phrases, at an output of the lexicon 3, are checked by a syntax analysis unit 4. Any phrases, whose syntax does not correspond with the language concerned, are excluded during this syntax check.

Thus, as is illustrated in Figure 1 of the accompanying drawings, the interaction between the units 1 and 3, and between the, units 3 and 4, enables words, and word combinations, which are found to be acceptable by the lexicon 3 and syntax analysis unit 4, to be applied to a speech model generating unit 5.

The lexical and syntactical information, respectively generated by the units 3 and 4, is used, by the unit 5, to create a model of the input speech. The intonation pattern of the speech model, created by the unit 5, is a standardised intonation pattern for the language concerned, or an intonation pattern, which has been established by training, or explicit knowledge, using a number of dialects of the language concerned.

As for the information, concerning the points in time at which the extreme values, FO-max and FO-min, of the fundamental tone FO occur, it is possible for the speech model generating unit 5 to classify the incoming speech in dialect categories in accordance with stored descriptions of dialects concerned, i.e. stored intonation descriptions.

The intonation pattern of the speech model, i.e. the maximum and minimum values and their positions, is applied to a comparator unit 7, as is the intonation pattern output of the analysing unit 6. Thus, the maximum and minimum values of the fundamental tone curves of the input speech and speech model are compared by the comparator unit 7. The purpose of the comparison is to identify a time difference between the occurrence of the maximum and minimum values of the fundamental tone curve of the incoming speech and the maximum and minimum values of the fundamental tone curve of the speech model.

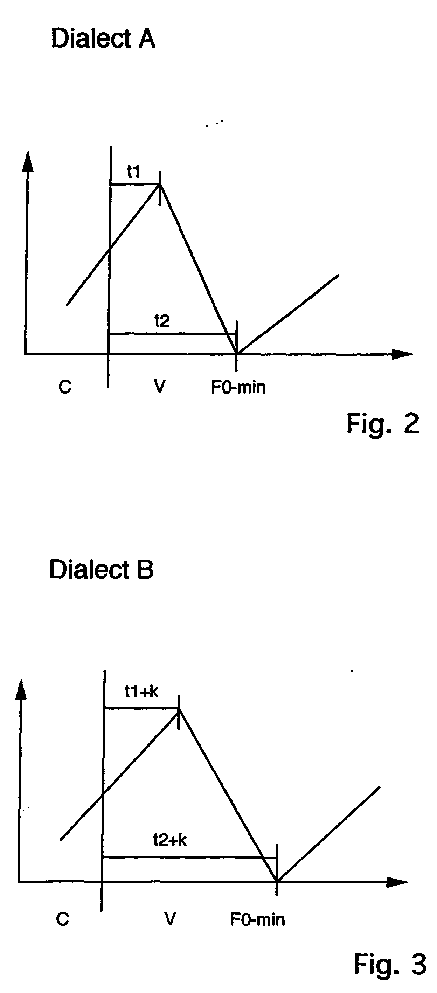

It will be seen from the following description with reference to Figures 2 and 3 of the accompanying drawings, that the reference against which the time difference is measured, in a preferred arrangement, is the point at which the consonant/vowel boundary, i.e. the CV-boundary, occurs.

The identified time difference which is indicative of the dialect in the input speech, i.e. the spoken language, is applied to the speech model generating unit 5 to enable the intonation pattern of the speech model to be corrected so that it corresponds to the intonation pattern of the corresponding words and/or phrase of the input speech. Thus, this corrective process enables the dialectal information in the input speech to be incorporated into the speech model.

Thus, the fundamental tone curve of the speech model at the output of the unit 5, is based on information from the lexicon 3 (orthography and transcription) and syntactic information. The transcription information includes lexically abstracted accent information, of type stressed syllables, i.e. tonal word accents I and II, and information relating to the location of secondary accent, i.e. information given, for instance, in dictionaries. After correction of the speech model to the dialect in question, the related fundamental tone information can be used to facilitate selection, by the speech recognition unit 1, of possible candidates for use, for example, in a speech-to-text conversion process. In other words, the dialectal information, at an output of the speech model generating unit 5, is applied to an input (not illustrated) of the speech recognition unit 1, and is used to adjust the recognition pattern of the speech recognition model, for example, the Hidden Markov model, to take account of the dialectal information.

A further consequence of this speech model corrective process is that, through time, the speech model generating unit 5 will be trained, using a number of different dialects of the language concerned, so that the initially created speech model will have an intonation pattern, which has been established by the training process.

Furthermore, the dialectal information, at an output of the speech model generating unit 5, may be used for other purposes, for example, in an artificial speech generating unit (not illustrated), to facilitate the generation of artificial speech in the dialect concerned. A speech generating unit, having the ability to generate speech in any desired dialect, could be used in many different applications, for example, to provide a readily understandable response to users of voice-responsive systems which include a speech recognition device, according to the present invention, i.e. the system would be adapted to tailor the dialect of the verbal response to match the dialect of the voice input. This would provide a user friendly system because the language of the man-machine dialogue would be in accordance with the dialect of the user concerned.

Thus, the speech model created by the speech recognition device, according to the present invention, which is in dialectal correspondence with the input speech, i.e. the dialect characteristics of the input speech are incorporated into the speech models, is, in relation to the known prior art, a more exact interpretation of the input speech.

Figures 2 and 3 of the accompanying drawings diagrammatically illustrate how the word accent (accent II, i.e. grave) can be schematically realised in two different Swedish dialects, i.e. dialect 'A' (Figure 1) and dialect 'B' (Figure 2). In the Swedish language, the difference, in terms of intonation pattern, between different dialects can be described by different points in time for word and sentence accent.

As illustrated in Figure 2 of the drawings, the locations of the maximum and minimum values for the fundamental tone curve for speech, (dialect 'A'), are respectively displaced, in time, relative to the CV-boundary for the word accent (accent II), by the times t1 and t2. For dialect 'B' (Figure 3), the respective time differences, relative to the same CV-boundary, are t1+k and t2+k. Thus, the maximum and minimum values of the fundamental tone curve for speech with the dialect 'B' are displaced, in time, from the corresponding values of the fundamental tone curve for speech with the dialect 'A', by the time k. It is, therefore, possible to identify dialects by using information concerning the points in time at which the extreme values, FO-max and FO-min, of the intonation pattern of the speech concerned occur.

The dialectal information obtained in this manner can be used for the interpretation of speech, i.e. the information can be used, in the manner outlined above, to bring the intonation pattern of the speech model into conformity with the input speech. Since the corrected speech model exhibits the language characteristics (including dialect information) of the input speech it can be used to give an increased understanding of the input speech.

The ability to readily interpret different dialects in a language using fundamental tone curve information, are of some significance because such interpretations can be effected without having to train the speech recognition system. The result of this is that the size, and thereby cost, of a speech recognition system, made in accordance with the present invention, can be much smaller than would be possible with known systems. There is also a space saving. The present invention also makes it possible to identify particular dialects and exclude others, as part of the speech recognition process. These are, therefore, distinct advantages over known speech recognition systems.

Also, the ability to detect speech, irrespective of dialect variations, in accordance with the method and device according to the present invention, makes it possible to use speech in many different voice-responsive applications. For instance, the speech recognition method and device, according to the present invention, could be used for controlling different equipments, for example, operation of vending machines, or to switch electrical equipment, such as, heating equipment, pumping stations, and the like, on and off, irrespective of dialect of the user.

The invention could also be used to control and/or effect operation of telecommunication subscriber equipments, such as telephones, facsimile machines, answer phones, and the like.

The present invention may also be used, as outlined above, in systems involving two-way man-machine communications, for example, unmanned voice-responsive computer based systems which are responsive to spoken instructions/commands, irrespective of dialect, and which are adapted to provide a response, or acknowledgement, in the dialect of the user. Typical applications for such systems are telecommunication services, such as, shopping by telephone, and banking services.

As illustrated in Figure 1 of the accompanying drawings, the present invention may be used for speech-to-text conversion, for example, the output of the speech recognition unit 1 could be in the form of a print out of the words, and/or word combinations, from which the speech model is formed. Alternatively, the output of the unit 1 may be represented in other forms, for example, a visual display.

With the speech-to-text conversion process, the text at the output of the unit 1 could be used for many applications, for example, the production of reports, or text messages, or translation into another language using language conversion technology. The language-to-language conversion systems would be ideally suitable for use in personal translation systems because it would facilitate face-to-face communication between individuals who speak different languages, but not each others, and would not be affected by the dialects spoken by the individuals concerned. Also, it would be possible to make country-wide use of speech for many applications and/or services, for example, telecommunication and bank services of different kinds, without the need to use special codes, or to cater for possible differences in the dialects in different parts of the country.

Other possible applications are educational/language training systems.

The present invention is not limited to the embodiments outlined above, but can be modified within the scope of the appended patent claims and the inventive concept.

## Claims

1. A method for recognising a spoken language in which a number of phonemes, from a segment of input speech, are identified and interpreted as possible words, or word combinations, to establish a model of the speech, the speech model having word and sentence accents according to a standardised pattern for the language concerned, the method comprising the steps of determining the fundamental tone curve of the input speech; determining the intonation pattern of the fundamental tone of the input speech and thereby the maximum and minimum values of the fundamental tone curve and their respective positions; determining the intonation pattern of the fundamental tone curve of the speech model and thereby the maximum and minimum values of the fundamental tone curve and their respective positions, characterised in that the method includes the steps of; comparing the intonation pattern of the input speech with the intonation pattern of the speech model to identify a time difference between the occurrence of the maximum and minimum values of the fundamental tone curves of the incoming speech in relation to the maximum and minimum values of the fundamental tone curve of the speech model, the identified time difference being indicative of dialectal characteristics of the input speech; and adjusting the intonation pattern of the speech model, utilising the identified time difference, to bring the speech model into conformity with the input speech and thereby the dialectal characteristics of the input speech.

2. A method as claimed in claim 1, characterised in that the identified phonemes are combined into allophone strings, and in that the allophone strings are used, in combination with the fundamental tone curve, to identify, and thereby detect the positions of, the maximum and minimum values of the fundamental tone of the input speech.

3. A method as claimed in claim 1 or claim 2, characterised in that the time difference is determined in relation to an intonation pattern reference point, which reference point is the point at which a consonant/vowel limit occurs.

4. A method as claimed in any one of the preceding claims, characterised in that the words in the speech model are checked lexically, in that the phrases in the speech model are checked syntactically, and in that words and phrases which are not lexically identified and syntactically analysed are excluded from the speech model, and in that the orthography and phonetic transcription of the words in the speech model are checked.

5. A method as claimed in claim 4, characterised in that the transcription information includes lexically abstracted accent information, of type stressed syllables, and information relating to the location of secondary accent, and in that said accent information relates to tonal word accents I and accent II.

6. A method as claimed in any one of the preceding claims, characterised in that the intonation patterns of the fundamental tone curves of the input speech are classified into dialect categories in accordance with stored descriptions of the dialects concerned.

7. A method as claimed in any one of the preceding claims, characterised in that the identification of a number of phonemes from the input speech is effected using a speech recognition model, and in that the identified time difference is used to adjust the recognition pattern of the speech recognition model to take account of dialectal information, in that the established speech model has word and sentence accents, according to a pattern established by a training process, or explicit knowledge, using identified time differences for a number of different dialects of the language concerned.

8. A method as claimed in claim 7 characterised in that the speech recognition model is a Hidden Markov model.

9. A device for recognising a spoken language including speech recognition means (1) for identifying a number of phonemes from a segment of input speech; and interpretation means for interpreting the phonemes, as possible words, or word combinations, to establish a model of the speech, the speech model having word and sentence accents according to a standardised pattern for the language concerned, extraction means (2) for extracting the fundamental tone curve of the input speech; first analysing means (6) for determining the intonation pattern of the fundamental tone of the input speech and thereby the maximum and minimum values of the fundamental tone curve and their respective positions; second analysing means (5) for determining the intonation pattern of the fundamental tone curve of the speech model and thereby the maximum and minimum values of the fundamental tone curve and their respective positions; characterised in that the device further includes comparison means (7) for comparing the intonation pattern of the input speech with the intonation pattern of the speech model to identify a time difference between the occurrence of the maximum and minimum values of the fundamental tone curves of the incoming speech in relation to the maximum and minimum values of the fundamental tone curve of the speech model, the identified time difference being indicative of dialectal characteristics of the input speech; and correction means for adjusting the intonation pattern of the speech model, utilising the identified time difference, to bring the speech model into conformity with the input speech and thereby the dialectal characteristics of the input speech.

10. A device as claimed in claim 9, characterised in that the identified phonemes are combined into allophone strings by the speech recognition means (1), and in that the first analysing means (6) are adapted, in response to receipt of the allophone strings from the speech recognition means (1), to identify, and thereby detect the positions of, the maximum and minimum values of the fundamental tone of the input speech.

11. A device as claimed in claim 9, or claim 10, characterised in that the time difference is determined in relation to an intonation pattern reference point, which reference point is the point at which a consonant/vowel limit occurs.

12. A device as claimed in any one of the claims 9 to 11, characterised in that the device includes checking means (3,4) for lexically checking the words in the speech model and for syntactically checking the phrases in the speech model, and in that words and phrases which are not lexically identified and syntactically analysed being excluded from the speech model, where the checking means (3) checks the orthography and phonetic transcription of the words in the speech model.

13. A device as claimed in claim 12, characterised in that the transcription information includes lexically abstracted accent information, of type stressed syllables, and information relating to the location of secondary accent, and in that said accent information relates to tonal word accents I and accent II.

14. A device as claimed in any one of the claims 9 to 13, characterised in that the device includes means for classifying the intonation patterns of the fundamental tone curves of the input speech into dialect categories in accordance with stored descriptions of the dialects concerned.

15. A device as claimed in any one of the claims 9 to 14, characterised in that the identification of a number of phonemes from the input speech is effected using a speech recognition model, in that the identified time difference is applied to the speech recognition means (1), and in that the speech recognition means (1) are adapted to use the identified time difference to adjust the recognition pattern of the speech recognition model to take account of dialectal information, and where the interpretation means are adapted to be trained, using the identified time differences for a number of different dialects of the language concerned, and in that the speech model, established by the interpretation means, has an intonation pattern established by the training process.

16. A device as claimed in claim 15 characterised in that the speech recognition model is a Hidden Markov model.

17. A speech-to-text conversion system, including a device as claimed in any one of the claims 9 to 16, or comprising the means for performing the steps as claimed in any of the claims 1 to 8.

18. A language-to-language conversion system, including a device as claimed in any one of the claims 9 to 16,1 or comprising the means for performing the steps as claimed in any of the claims 1 to 8.

19. A system responsive to spoken words, irrespective of the dialect of the speaker, including a device as claimed in any one of the claims 9 to 16, or comprising the means for performing the steps as claimed in any of the claims 1 to 8.

20. A system as claimed in claim 19, characterised in that the voice-responsive system is, or forms part of, electrical equipment or telecommunication subscriber equipment, said electrical equipment being provided by, or forming part of, central heating equipment or pumping station equipment.

21. A system as claimed in claim 19, including an artificial speech generating unit adapted to generate, in response to receipt of the identified time difference, artificial speech in the dialect of the spoken instructions.

## Patentansprüche

1. Verfahren zum Erkennen einer gesprochenen Sprache, bei dem eine Anzahl von Phonemen aus einem Segment von Eingangssprache identifiziert und als mögliche Wörter oder Wortkombinationen interpretiert werden, um ein Modell der Sprache zu erstellen, wobei das Sprachmodell Wort- und Satzakzente gemäß einem standardisiertem Muster für die betreffende Sprache hat, wobei das Verfahren die Schritte aufweist: Bestimmung der Fundamentaltonkurve der Eingangssprache; Bestimmung des Intonationsmusters des Fundamentaltones der Eingangssprache und damit der Maximal- und Minimalwerte der Fundamentaltonkurve und deren jeweiligen Positionen; Bestimmung des Inonationsmusters der Fundamentaltonkurve des Sprachmodells und damit der Maximal- und Minimalwerte der Fundamentaltonkurve und deren jeweiliger Positionen, dadurch **gekennzeichnet,** daß das Verfahren die folgenden Schritte aufweist: Vergleichen des Intonationsmusters der Eingangssprache mit dem Intonationsmuster des Sprachmodells, um eine Zeitdifferenz zwischen dem Auftreten der Maximal- und Minimalwerte der Fundamentaltonkurve der ankommenden Sprache in Relation zu den die Maximal- und Minimalwerten der Fundamentaltonkurve des Sprachmodells zu identifizieren, wobei die identifizierte Zeitdifferenz eine Anzeige für Dialektbesonderheiten der Eingangssprache ist; und Adjustieren des Intonationsmusters des Sprachmodells unter Verwendung der identifizierten Zeitdifferenz, um das Sprachmodell in Übereinstimmung mit der Eingangssprache und dadurch mit den Dialektbesonderheiten der Eingangssprache zu bringen.

2. Verfahren nach Anspruch 1, dadurch **gekennzeichnet,** daß die identifizierten Phoneme zu allophonen Strängen kombiniert werden und daß die allophonen Stränge zusammen mit der Fundamentaltonkurve dazu benutzt werden, um die Maximal- und Minimalwerte des Fundamentaltons der Eingangssprache zu identifizieren und dadurch deren Positionen zu detektieren.

3. Verfahren nach Anspruch 1 oder 2, dadurch **gekennzeichnet,** daß die Zeitdifferenz bestimmt wird in Bezug auf einen Referenzpunkt des Intonationsmusters, welches der Punkt ist, an dem eine Konsonant/Vokal-Grenze auftritt.

4. Verfahren nach einem der vorangehenden Ansprüche, dadurch **gekennzeichnet,** daß die Wörter in dem Sprachmodell lexikalisch geprüft werden, daß die Satzteile in dem Sprachmodell syntaktisch geprüft werden, und daß Wörter und Satzteile, die nicht lexikalisch identifiziert und syntaktisch analysiert werden, aus dem Sprachmodell ausgeschlossen werden, und daß die autographische und phonetische Transkription der Wörter in dem Sprachmodell geprüft wird.

5. Verfahren nach Anspruch 4, dadurch **gekennzeichnet,** daß die Transkriptionsinformation lexikalisch abstrahierte Akzentinformation von typusbetonten Silben, und Information bezüglich der Lokalisierung von sekundären Akzenten enthält, und daß die Akzentinformation sich auf tonale Wortakzente I und Akzente II bezieht.

6. Verfahren nach einem der vorangehenden Ansprüche, dadurch **gekennzeichnet,** daß die Intonationsmuster der Fundamentaltonkurven der Eingangssprache in Dialektkategorien klassifiziert werden entsprechend gespeicherten Beschreibungen der in Frage kommenden Dialekte.

7. Verfahren nach einem der vorangehenden Ansprüche, dadurch **gekennzeichnet,** daß die Identifizierung einer Anzahl von Phonemen von der Eingangssprache mittels eines Spracherkennungsmodells erfolgt und daß die identifizierte Zeitdifferenz verwendet wird, um das Erkennungsmuster des Spracherkennungsmodells so anzupassen, daß es Dialektinformation berücksichtigt, und daß das erstellte Sprachmodell Wort- und Satzakzente gemäß einem Muster aufweist, das durch einen Lernprozeß oder durch ausdrückliche Kenntnis erstellt wurde, wobei identifizierte Zeitdifferenzen für eine Anzahl von verschiedenen Dialekten der betreffenden Sprache verwendet werden.

8. Verfahren nach Anspruch 7, dadurch **gekennzeichnet,** daß das Spracherkennungsmodell ein Hidden-Markov-Modell ist.

9. Vorrichtung zum Erkennen einer gesprochenen Sprache, mit Spracherkennungsmitteln (1) zum Identifizieren einer Anzahl von Phonemen aus einem Segment der Eingangssprache; und Interpretationsmitteln zum Interpretieren der Phoneme als mögliche Wörter oder Wortkombinationen zur Erstellung eines Modells der Sprache, wobei das Sprachmodell Wort- u. Satzakzente gemäß einem standardisierten Muster für die betreffende Sprache aufweist, Extraktionsmitteln (2) zum Extrahieren der Fundamentaltonkurve der Einganssprache; ersten Analysiermitteln (6) zum Bestimmen des Intonationsmusters des Fundamentaltons der Eingangssprache und damit der Maximal- und Minimalwerte der Fundamentaltonkurve und deren jeweiligen Positionen; zweite Analysiermittel (5) zum Bestimmen des Intonationsmusters der Fundamentaltonkurve des Sprachmodells und dadurch der Maximal- und Minimalwerte der Fundamentaltonkurve und deren jeweiligen Positionen; dadurch **gekennzeichnet,** daß die Vorrichtung ferner aufweist Vergleichsmittel (7) zum Vergleichen des Intonationsmusters der Eingangssprache mit dem Intonationsmuster des Sprachmodells zum Identifizieren einer Zeitdifferenz zwischen dem Auftreten der Maximal- und Minimalwerte der Fundamentaltonkurve der Eingangssprache in Bezug auf die Maximal- und Minimalwerte der Fundamentaltonkurve des Sprachmodells, wobei die identifizierte Zeitdifferenz Dialektbesonderheiten der Eingangssprache anzeigt; und Korrigiermittel zum Einstellen des Intonationsmusters des Sprachmodells unter Verwendung der identifizierten Zeitdifferenz, um das Sprachmodell in Übereinstimmung mit der Eingangssprache und dadurch mit den Dialektbesonderheiten der Eingangssprache zu bringen.

10. Vorrichtung nach Anspruch 9, dadurch **gekennzeichnet,** daß die identifizierten Phoneme durch die Spracherkennungsmittel (1) zu allophonen Strängen kombiniert werden und daß die ersten Analysiermittel (6) so angepaßt sind, daß sie bei Empfang der allophonen Stränge von den Spracherkennungsmitteln (1) die Maximal- und Minimalwerte des Fundamentaltones der Eingangssprache identifizieren und dadurch deren Positionen detektieren.

11. Vorrichtung nach Anspruch 9 oder 10, dadurch **gekennzeichnet,** daß die Zeitdifferenz in Bezug auf einen Referenzpunkt des Intonationsmusters bestimmt wird, welcher der Punkt ist, bei dem eine Konsonant/Vokal-Grenze auftritt.

12. Vorrichtung nach einem der Ansprüche 9-11, dadurch **gekennzeichnet,** daß die Vorrichtung Überprüfungsmittel (3, 4) aufweist, um die Wörter in dem Sprachmodell lexikalisch zu prüfen und die Satzteile des Sprachmodells syntaktisch zu prüfen, und daß Wörter- und Satzteile, die nicht lexikalisch identifiziert und syntaktisch analysiert wurden, aus dem Sprachmodell ausgeschlossen werden, wobei die Überprüfungsmittel (3) die Orthographie und phonetische Transkription der Wörter in dem Sprachmodell prüfen.

13. Vorrichtung nach Anspruch 12, dadurch **gekennzeichnet,** daß die Transkriptionsinformation lexikalisch abstrahierte Akzentinformation von typusbetonten Silben sowie Informationen bezüglich der Lokalisierung eines Sekundärakzentes aufweist, und daß die Akzentinformation sich auf tonale Wortakzente I und Akzente II bezieht.

14. Vorrichtung nach einem der Ansprüche 9-13, dadurch **gekennzeichnet,** daß die Vorrichtung Mittel zum Klassifizieren der Intonationsmuster der Fundamentaltonkurven der Eingangssprache in Dialektkategorien entsprechend gespeicherten Beschreibungen der in Frage kommenden Dialekte umfaßt.

15. Vorrichtung nach einem der Ansprüche 9-14, dadurch **gekennzeichnet,** daß die Identifizierung einer Anzahl von Phonemen aus der Eingangssprache mit einem Spracherkennungsmodell erfolgt, daß die identifizierte Zeitdifferenz den Spracherkennungsmitteln (1) zugeführt wird, und daß die Spracherkennungsmittel (1) so eingerichtet sind, daß sie die identifzierte Zeitdifferenz dazu verwenden, das Erkennungsmuster des Sprachmodells so anzupassen, daß es Dialektinformation berücksichtigt, und wobei die Interpretationsmittel trainiert werden können unter Verwendung der identifizierten Zeitdifferenzen einer Anzahl von verschiedenen Dialekten der betreffenden Sprache, und daß das von den Interpretationsmitteln erstellte Sprachmodell ein durch den Trainingsprozeß etabliertes Intonationsmuster hat.

16. Vorrichtung nach Anspruch 15, dadurch **gekennzeichnet,** daß das Spracherkennungsmodell ein Hidden-Markov-Modell ist.

17. Sprache-Text-Umwandlungssystem mit einer Vorrichtung nach einem der Ansprüche 9-16, oder mit Mitteln zum Durchführen der Schritte gemäß einem der Ansprüche 1-8.

18. Sprache-Sprache-Umwandlungssystem mit einer Vorrichtung nach einem der Ansprüche 9-16, oder mit Mitteln zum Durchführen der Schritte nach einem der Ansprüche 1-8.

19. Auf gesprochene Wörter reagierendes System, unabhängig vom Dialekt des Sprechers, mit einer Vorrichtung nach einem der Ansprüche 9-16 oder mit Mitteln zur Durchführung der Schritte nach einem der Ansprüche 1-8.

20. System nach Anspruch 19, dadurch **gekennzeichnet,** daß das auf Stimme reagierende System eine elektrische Installation oder eine Telekommunikations-Kundeninstallation oder Teil einer solchen ist, wobei die elektrische Installation von einer Zentralheizungsanlage oder einer Pumpstation gebildet wird oder Teil einer solchen ist.

21. System nach Anspruch 19, mit einer Kunstsprache-Erzeugeeinheit, die geeignet ist, in Abhängigkeit von Empfang der identifizierten Zeitdifferenz künstliche Sprache im Dialekt der gesprochenen Instruktionen zu erzeugen.

## Revendications

1. Procédé de reconnaissance d'un langage parlé dans lequel une pluralité de phonèmes, provenant d'un segment de parole d'entrée, sont identifiés et interprétés comme des mots possibles, ou des combinaisons de mots possibles, pour établir un modèle de la parole, le modèle de parole ayant des accents de mot et de phrase conformes à une configuration standardisée pour le langage concerné, le procédé comprenant les étapes de détermination de la courbe de ton fondamental de la parole d'entrée ; détermination de la configuration d'intonation du ton fondamental de la parole d'entrée et donc des valeurs maximales et minimales de la courbe de ton fondamental et de leurs positions respectives ; détermination de la configuration d'intonation de la courbe de ton fondamental du modèle de parole et donc des valeurs maximales et minimales de la courbe de ton fondamental et de leurs positions respectives ; caractérisé en ce que le procédé comprend les étapes de comparaison de la configuration d'intonation de la parole d'entrée avec la configuration d'intonation du modèle de parole pour identifier une différence de temps entre l'occurrence des valeurs maximales et minimales des courbes de ton fondamental de la parole d'entrée par rapport aux valeurs maximales et minimales de la courbe de ton fondamental du modèle de parole, la différence de temps identifiée étant indicative des caractéristiques dialectales de la parole d'entrée ; et d'ajustement de la configuration d'intonation du modèle de parole, en utilisant la différence de temps identifiée, de manière à amener le modèle de parole en conformité avec la parole d'entrée et donc avec les caractéristiques dialectales de la parole d'entrée.

2. Procédé selon la revendication 1, caractérisé en ce que les phonèmes identifiés sont combinés en chaînes allophones, et en ce qu'on utilise les chaînes allophones, en combinaison avec la courbe de ton fondamental, pour identifier et donc détecter les positions des valeurs maximales et minimales du ton fondamental de la parole d'entrée.

3. Procédé selon la revendication 1 ou la revendication 2, caractérisé en ce que la différence de temps est déterminée par rapport à un point de référence de la configuration d'intonation, ce point de référence étant le point auquel apparaît une limite consonne/voyelle.

4. Procédé selon une quelconque des revendications précédentes, caractérisé en ce que les mots dans le modèle de parole sont vérifiés lexicalement, en ce que les phrases dans le modèle de parole sont vérifiées en syntaxe, en ce que les mots qui ne sont pas identifiés lexicalement et les phrases qui ne sont pas analysées en syntaxe sont exclus du modèle de parole, et en ce que l'orthographe et la transcription phonétique des mots dans le modèle de parole sont vérifiées.

5. Procédé selon la revendication 4, caractérisé en ce que l'information de transcription comprend une information d'accent lexicalement abrégée, du type syllabes accentuées, et une information relative à la position d'un accent secondaire, et en ce que la dite information d'accent concerne les accents toniques de mot I et l'accent II.

6. Procédé selon une quelconque des revendications précédentes, caractérisé en ce que les configurations d'intonation des courbes de ton fondamental de la parole d'entrée sont classées en catégories de dialecte conformément à des descriptions stockées des dialectes concernés.

7. Procédé selon une quelconque des revendications précédentes, caractérisé en ce que l'identification d'une pluralité de phonèmes provenant de la parole d'entrée est effectuée au moyen d'un modèle de reconnaissance de la parole, en ce qu'on utilise la différence de temps identifiée pour ajuster la configuration de reconnaissance du modèle de reconnaissance de la parole afin de tenir compte des informations dialectales, et en ce que le modèle de parole établi possède des accents de mot et de phrase, conformément à une configuration établie par une procédure d'apprentissage, ou par connaissance explicite, au moyen des différences de temps identifiées pour une pluralité de dialectes différents du langage concerné.

8. Procédé selon la revendication 7, caractérisé en ce que le modèle de reconnaissance de la parole est un modèle de Hidden Markov.

9. Dispositif de reconnaissance d'un langage parlé incluant des moyens de reconnaissance de la parole (1) pour identifier une pluralité de phonèmes provenant d'un segment de la parole d'entrée ; et des moyens d'interprétation pour interpréter les phonèmes comme mots possibles, ou combinaisons de mots possibles, afin d'établir un modèle de la parole, le modèle de parole ayant des accents de mot et de phrase conformes à une configuration standardisée pour le langage concerné ; des moyens d'extraction (2) pour extraire la courbe de ton fondamental de la parole d'entrée ; des premiers moyens d'analyse (6) pour déterminer la configuration d'intonation du ton fondamental de la parole d'entrée et donc les valeurs maximales et minimales de la courbe de ton fondamental et leurs positions respectives ; des deuxièmes moyens d'analyse (5) pour déterminer la configuration d'intonation de la courbe de ton fondamental du modèle de parole et donc les valeurs maximales et minimales de la courbe de ton fondamental et leurs positions respectives ; caractérisé en ce que le dispositif comprend en outre des moyens de comparaison (7) pour comparer la configuration d'intonation de la parole d'entrée avec la configuration d'intonation du modèle de parole afin d'identifier une différence de temps entre l'occurrence des valeurs maximales et minimales des courbes de ton fondamental de la parole d'entrée par rapport aux valeurs maximales et minimales de la courbe de ton fondamental du modèle de parole, la différence de temps identifiée étant indicative des caractéristiques dialectales de la parole d'entrée ; et des moyens de correction pour ajuster la configuration d'intonation du modèle de parole, en utilisant la différence de temps identifiée, afin d'amener le modèle de parole en conformité avec la parole d'entrée et donc avec les caractéristiques dialectales de la parole d'entrée.

10. Dispositif selon la revendication 9, caractérisé en ce que les phonèmes identifiés sont combinés en chaînes allophones par les moyens de reconnaissance de la parole (1) et en ce que les premiers moyens d'analyse (6) sont prévus, en réponse à la réception des chaînes allophones venant des moyens de reconnaissance de la parole (1), pour identifier et donc détecter les positions des valeurs maximales ou minimales du ton fondamental de la parole d'entrée.

11. Dispositif selon la revendication 9 ou la revendication 10, caractérisé en ce que la différence de temps est déterminée en relation à un point de référence de la configuration d'intonation, ce point de référence étant le point auquel apparaît une limite consonne/voyelle.

12. Dispositif selon une quelconque des revendications 9 à 11, caractérisé en ce que le dispositif comprend des moyens de vérification (3,4) pour vérifier lexicalement les mots dans le modèle de parole et pour vérifier en syntaxe les phrases dans le modèle de parole, et en ce que les mots qui ne sont pas lexicalement identifiés et les phrases qui ne sont pas analysées en syntaxe sont exclus du modèle de parole, dans lequel les moyens de vérification (3) vérifient l'orthographe et la transcription phonétique des mots dans le modèle de parole.

13. Dispositif selon la revendication 12; caractérisé en ce que l'information de transcription comprend une information d'accent lexicalement abrégée, du type syllabes accentuées, et une information relative à la position d'un accent secondaire, et en ce que ladite information d'accent concerne des accents toniques de mot I et un accent II.

14. Dispositif selon une quelconque des revendications 9 à 13, caractérisé en ce que le dispositif comprend des moyens de classement des configurations d'intonation des courbes de ton fondamental de la parole d'entrée en catégories de dialecte conformément à des descriptions stockées des dialectes concernés.

15. Dispositif selon une quelconque des revendications 9 à 14, caractérisé en ce que l'identification d'une pluralité de phonèmes provenant de la parole d'entrée est effectuée au moyen d'un modèle de reconnaissance de la parole, en ce que la différence de temps identifiée est appliquée aux moyens de reconnaissance de la parole (1), et en ce que les moyens de reconnaissance de la parole (1) sont prévus pour utiliser la différence de temps identifiée afin d'ajuster la configuration de reconnaissance du modèle de reconnaissance de la parole de manière à tenir compte des informations dialectales, et dans lequel les moyens d'interprétation sont prévus pour être soumis à un apprentissage, utilisant les différences de temps identifiées pour une pluralité de dialectes différents du langage concerné, et en ce que le modèle de parole, établi par les moyens d'interprétation, possède une configuration d'intonation établie par la procédure d'apprentissage.

16. Dispositif selon la revendication 15, caractérisé en ce que le modèle de reconnaissance de la parole est un modèle de Hidden Markov.

17. Système de conversion de la parole an texte, incluant un dispositif selon une quelconque des revendications 9 à 16, ou comprenant les moyens d'exécution des étapes selon une quelconque des revendications 1 à 8.

18. Système de conversion de langage à langage, incluant un dispositif selon une quelconque des revendications 9 à 16, ou comprenant les moyens d'exécution des étapes selon une quelconque des revendications 1 à 8.

19. Système répondant à des mots parlés, indépendamment du dialecte du locuteur, incluant un dispositif selon une quelconque des revendications 9 à 16, ou comprenant les moyens d'exécution des étapes selon une quelconque des revendications 1 à 8.

20. Système selon la revendication 19, caractérisé en ce que le système répondant à la voix est un équipement électrique ou un équipement d'abonné de télécommunication, ou fait partie d'un tel équipement, ledit équipement électrique étant constitué par un équipement de chauffage central ou un équipement de station de pompage, ou faisant partie d'un tel équipement.

21. Système selon la revendication 19, incluant une unité de génération de parole artificielle prévue pour engendrer, en réponse à la réception de la différence de temps identifiée, une parole artificielle dans le dialecte des instructions parlées.
